# FASCICULE DE BREVET EUROPEEN

(11) **EP 3 164 585 B1**
(45) Date de publication et mention de la délivrance du brevet: **18.04.2018**
(21) Numéro de dépôt: 15753721.8
(22) Date de dépôt: 02.07.2015
(51) Int. Cl.: F02C 7/04, F02C 7/057

(54) **DISPOSITIF DE GUIDAGE D'AIR POUR TURBOMACHINE**
LUFTFÜHRUNGSVORRICHTUNG FÜR EINE TURBOMASCHINE
AIR GUIDANCE DEVICE FOR A TURBOMACHINE

(30) Priorité: 03.07.2014 FR 1456407
(43) Date de publication de la demande: 10.05.2017
(73) Titulaire: SAFRAN AIRCRAFT ENGINES, 75015 Paris (FR)
(72) Inventeur: COUILLEAUX, Alexandre, 91390 Morsang sur Orge (FR); FERRIER, Romain, 77680 Roissy En Brie (FR); SIRVIN, Nicolas, 91800 Brunoy (FR)
(74) Mandataire: Cabinet Camus Lebkiri
(86) Numéro de dépôt international: PCT/FR2015/051844
(87) Numéro de publication internationale: WO 2016/001602

(56) Documents cités:
- EP-A2- 1 942 258
- US-A- 4 706 910

## Description

### DOMAINE TECHNIQUE DE L'INVENTION

La présente invention se rapporte au domaine des turbomachines pour aéronefs, et concerne plus particulièrement un dispositif de guidage d'air de turbomachine du type comportant un couple d'hélices contrarotatives non carénées couramment dénommé « open rotor » ainsi que les turbopropulseurs d'avion.

### ETAT DE LA TECHNIQUE ANTERIEUR

Il est connu d'utiliser un ou plusieurs dispositif(s) de guidage d'air, ayant généralement la forme d'un lobe, localisée(s) circonférentiellement autour de l'axe longitudinal d'une turbomachine.

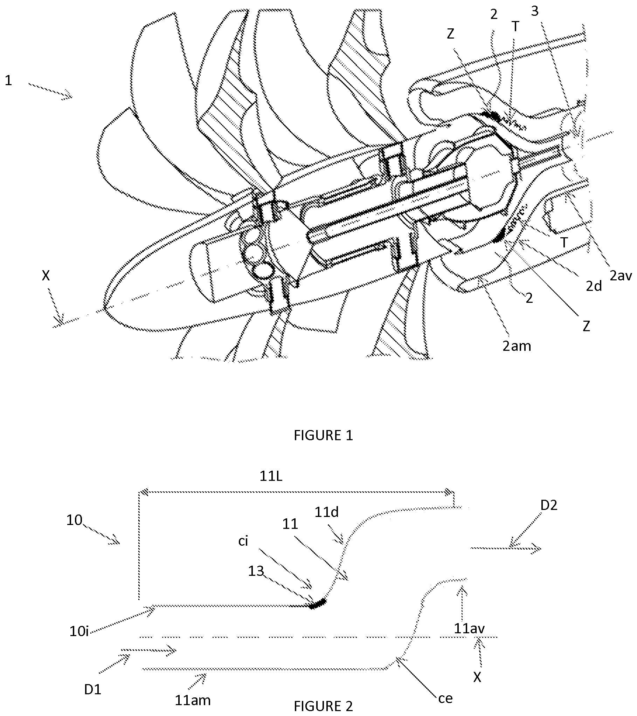

La figure 1 illustre un exemple d'une turbomachine 1 dénommée parfois bilobées conforme à celle décrit dans le document FR2951502. Plus particulièrement, cette turbomachine 1 comporte deux dispositifs de guidage d'air 2 ayant chacune la forme d'un S. Ces dispositifs de guidage d'air 2 sont symétriques par rapport à l'axe longitudinal X de la turbomachine 1 et raccordées à une veine primaire 3 alimentant en air un moteur de la turbomachine 1 comprenant au moins un compresseur, une chambre de combustion et une turbine.

De manière générale, un dispositif de guidage d'air a pour fonction principale d'alimenter le moteur en air de manière la plus homogène possible. Cependant, le déport radial important de ces dispositifs de guidage d'air, et le fait que celles-ci ne soient pas axisymétriques, induit une distorsion du flux d'air qui s'écoule au travers d'elles et qui est destiné à alimenter la veine primaire de la turbomachine. Ces distorsions induisent une perte considérable d'efficacité du moteur.

Plus particulièrement, un dispositif de guidage d'air 2 présente une partie amont 2am recevant un flux d'air selon une première direction qui est ensuite acheminé, via une partie de déviation 2d, dans une partie aval 2av selon une deuxième direction. Cette partie de déviation 2d peut être formée comme dans l'exemple de deux coudes successifs. Le phénomène de distorsion est essentiellement dû au décollement se produisant au niveau du changement de direction entre la partie amont 2am et la partie de déviation 2d. Ce décollement engendre des zones à faibles pression (représentées par la zone Z) qui provoquent des tourbillons T importants en sortie, autrement dit au niveau de l'extrémité aval de la partie aval 2av. Plus l'angle de déviation est grand, et plus il y aura un décollement important à l'origine d'une distorsion importante.
Le document EP 1942258 A2 présente un canal d'alimentation en air de turbomachine comprenant un dispositif de contrôle actif de la couche limite au niveau d'un coude.

### EXPOSE DE L'INVENTION

L'invention a donc pour objectif de remédier aux inconvénients de l'état de la technique. Dans ce contexte, l'invention vise à proposer un dispositif de guidage d'air pour turbomachine permettant de diminuer le phénomène de décollement.

A cette fin, l'invention porte sur un dispositif de guidage d'air pour turbomachine tel que définit par la revendication 1 et comportant un canal d'alimentation en air d'un moteur de turbomachine, le canal d'alimentation présentant une partie amont et une partie aval reliée entre elles par une partie de déviation construite et adaptée pour acheminer le flux d'air reçu selon une première direction en provenance de la partie amont vers une deuxième direction au sein de la partie aval.

En outre, la partie amont et la partie de déviation sont connectées entre elles au moyen d'un coude intérieur et d'un coude extérieur. Au niveau du coude intérieur, la surface interne du dispositif de guidage d'air présente une rainure s'étendant longitudinalement dans le sens de la longueur du canal d'alimentation.

Par ailleurs, les bords longitudinaux de la rainure sont évasés en direction de l'extrémité aval de la partie amont du canal d'alimentation, la largeur amont de la rainure étant inférieure à la largeur aval de la rainure. En d'autres termes, cette rainure est positionnée au niveau du changement de direction entre la partie amont et la partie de déviation.

Il convient de noter que la rainure permet d'augmenter localement le taux de turbulence. Cette augmentation du taux de turbulence permet de limiter le décollement de la couche limite dans le dispositif de guidage d'air et donc d'améliorer son rendement et sa distorsion. Dit autrement, la rainure permet de limiter de manière importante le décollement dans le dispositif de guidage d'air car la vitesse d'écoulement des flux est diminuée par la présence de la rainure.

De manière générale, les termes « amont » et « aval » utilisés dans l'ensemble de la présente description sont à considérer par rapport à la direction d'écoulement des flux.

De façon non-limitative, le dispositif de guidage d'air peut être formé par une manche d'entrée d'air de turbomachine du type comportant un couple d'hélices contrarotatives non carénées couramment dénommé « open rotor » ainsi que les turbopropulseurs d'avion.

Dans une autre mise en oeuvre non limitative, le dispositif de guidage d'air peut être formé par un conduit d'un ensemble compresseur.

En outre, un intérêt de cette rainure par rapport à un vortex generator (VG) réside en son caractère non intrusif dans le conduit. Elle ne risque pas d'être détériorée par des éléments extérieurs (oiseaux, grêlons,...) ingérés par le moteur. Au contraire, les vortex generators font saillie dans le conduit et sont susceptibles d'être détériorés par les éléments extérieurs ingérés.

Outre les caractéristiques qui viennent d'être évoquées dans le paragraphe précédent, le dispositif de guidage d'air selon l'invention peut présenter une ou plusieurs caractéristiques complémentaires parmi les suivantes, considérées individuellement ou selon toutes les combinaisons techniquement réalisables.

Dans une réalisation non limitative, la largeur amont de la rainure est comprise entre 0.021 xR et 0.082xR, où R est le rayon d'un cercle dont la surface est égale à la surface de la section d'entrée de la partie amont du canal d'alimentation, la section d'entrée étant située dans un plan perpendiculaire à l'axe longitudinal de la partie amont. On entend par axe longitudinal de la partie amont, un axe s'étendant sensiblement au centre et dans le sens de la longueur de la partie amont.

Dans une réalisation non limitative, la largeur aval de la rainure est comprise entre 0.021 xR et 0.082xR, où R est le rayon d'un cercle dont la surface est égale à la surface de la section d'entrée de la partie amont du canal d'alimentation, ladite section d'entrée étant située dans un plan perpendiculaire à l'axe longitudinal de la partie amont.

Dans une réalisation non limitative, la rainure présente une longueur comprise entre 0.01xR et 0.21xR, où R est le rayon d'un cercle dont la surface est égale à la surface de la section d'entrée de la partie amont du canal d'alimentation, ladite section d'entrée étant située dans un plan perpendiculaire à l'axe longitudinal de la partie amont.

Dans une réalisation non limitative, la rainure présente une hauteur comprise entre 0.001 xR et 0.012xR, où R est le rayon d'un cercle dont la surface est égale à la surface de la section d'entrée de la partie amont du canal d'alimentation, ladite section d'entrée étant située dans un plan perpendiculaire à l'axe longitudinal de la partie amont.

Dans une réalisation non limitative, au moins une partie de la surface interne de la rainure présente des imperfections.

Dans une réalisation non limitative, une partie disposée au niveau de l'extrémité amont de la surface interne de la rainure est lisse.

Dans une réalisation non limitative, l'extrémité aval de la rainure forme avec la surface interne de la rainure un angle supérieur à 90 degrés.

Dans une réalisation non limitative, le dispositif de guidage d'air comporte en outre un canal d'évacuation des objets indésirables, ledit canal d'évacuation des objets indésirables étant raccordé à l'extrémité aval de la partie amont du canal d'alimentation.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
- la figure 1 représente une turbomachine à hélices contrarotatives comportant deux dispositifs de guidage d'air conforme à l'état de la technique ;
- la figure 2 représente, de manière schématique, un premier exemple d'un dispositif de guidage d'air pour turbomachine conforme à l'invention ;
- la figure 3 représente, de manière schématique, un deuxième exemple d'un dispositif de guidage d'air pour turbomachine conforme à l'invention,
- la figure 4 représente, de manière schématique, un premier exemple non limitatif d'une rainure que comporte un dispositif de guidage d'air conforme à l'invention,
- la figure 5 représente, de manière schématique, un deuxième exemple non limitatif d'une rainure que comporte un dispositif de guidage d'air n'entrant pas dans le cadre de l'invention,
- la figure 6 illustre la section d'entrée de la partie amont du canal d'alimentation conforme à l'invention,
- la figure 7 illustre de façon schématique les dimensions possibles d'une rainure que comporte un dispositif de guidage d'air conforme à l'invention,
- la figure 8 représente, de manière schématique, un troisième exemple non limitatif d'un dispositif de guidage d'air conforme à l'invention.

Dans toutes les figures, les éléments communs portent les mêmes numéros de référence.

### DESCRIPTION DETAILLEE D'AU MOINS UN MODE DE REALISATION NON LIMITATIF DE l'INVENTION

La figure 1 a été utilisée pour illustrer un dispositif de guidage d'air selon l'état de la technique.

La figure 2 représente, de manière schématique, un dispositif de guidage d'air 10 pour turbomachine conforme à l'invention. Ce dispositif de guidage d'air 10 comporte un canal d'alimentation 11 en air d'un moteur de turbomachine.

Le canal d'alimentation 11 présente une partie amont 11am et une partie aval 11av reliée entre elles par une partie de déviation 11d du flux d'air. Plus particulièrement, le flux d'air entre dans le canal d'alimentation 11 via l'extrémité amont de la partie amont 11 am puis est acheminé selon une première direction D1 via la partie amont 11 am jusqu'à la partie de déviation 11d. La partie de déviation 11d achemine alors ce flux d'air jusqu'à la partie aval 11 av du canal d'alimentation 11 au sein de laquelle partie aval 11 av le flux s'écoule selon une deuxième direction D2.

En outre, la partie amont 11am et la partie de déviation 11d sont connectées entre elles via un coude intérieur Ci et un coude extérieur Ce. Au niveau du coude intérieur Ci (i.e. au niveau du changement de direction où un phénomène de décollement se produit habituellement), la surface interne 10i du dispositif de guidage d'air 10 présente une rainure 13 (également dénommée écope 13) s'étendant longitudinalement dans le sens de la longueur 11L du canal d'alimentation 11.

La surface interne 10i correspond à la surface en contact avec l'écoulement des flux d'air. En outre, comparativement au coude externe Ce, le coude interne Ci correspond, dans l'exemple illustré, au coude dont le rayon de courbure est le plus petit.

Cette rainure 13 permet de retarder le décollement et ainsi de diminuer voir d'éviter la génération de tourbillons. Cette particularité permet de conserver un écoulement homogène et une pression optimale en sortie du canal d'alimentation 11.

Dans cette réalisation non limitative, la rainure 13 est disposée au niveau du changement de direction du flux d'air imposé par la partie de déviation 11d.

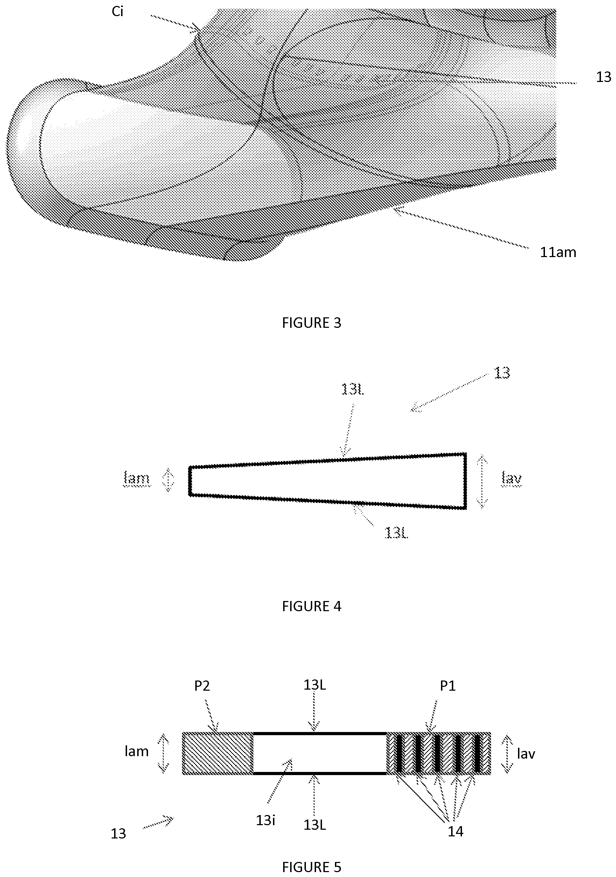

La figure 3 illustre un deuxième exemple de réalisation d'un dispositif de guidage d'air 10 conforme à l'invention. Plus particulièrement, la figure 3 représente la partie amont 11 am et le coude intérieur Ci du dispositif de guidage d'air. On peut également voir par transparence la présence d'une pluralité de rainures 13.

En effet, dans cette réalisation non limitative, la surface interne 10i du dispositif de guidage d'air 10 comporte au niveau du coude intérieur Ci une pluralité de rainures 13 s'étendant longitudinalement dans le sens de la longueur du canal d'alimentation. La présence d'une pluralité de rainures 13 permet d'améliorer le phénomène consistant à retarder le décollement. L'écoulement des flux au sein du dispositif de guidage d'air est ainsi homogène et la pression en sortie du canal d'alimentation 11 est optimale.

La figure 4 illustre une rainure 13 que comporte un dispositif de guidage d'air conforme à l'invention. Les bords longitudinaux 13L de la rainure 13 sont évasés en direction de l'extrémité aval de la partie amont 11 am du canal d'alimentation 11. Autrement dit la largeur amont lam de la rainure 13 est inférieure à la largeur aval lav de la rainure 13. Cette forme de la rainure 13 divergente permet de ralentir le flux d'air s'écoulant à l'intérieur de la rainure 13 et ainsi crée localement une zone de cisaillement qui augmente le niveau de turbulence local. Cet effet permet de retarder tout phénomène de décollement en aval.

La figure 5 représente, de manière schématique, un exemple de réalisation de la surface interne 13i d'une rainure 13 que comporte un canal d'alimentation conforme à l'invention.

On peut noter que dans cette réalisation non limitative, les bords longitudinaux 13L de la rainure 13 sont parallèles entre eux, ce qui n'entre pas dans le cadre de l'invention. En outre, dans cette réalisation, la surface interne 13i de la rainure 13, correspondant à la surface formant le fond de la rainure 13, présente au niveau d'une première partie P1 des imperfections 14. Cette première partie P1 est disposée à l'extrémité aval de la rainure 13 et comporte une pluralité de créneau 14. Ces créneaux 14 peuvent être remplacés par tout autre type d'imperfections. Ces imperfections peuvent par exemple être réalisées via une rugosité de la surface interne 13i ou la présence de picots.

Dans cette réalisation, la surface interne 13i de la rainure 13, présente une deuxième partie P2 lisse dont la tolérance peut être, par exemple, de +/-0.127mm. Cette deuxième partie P2 lisse est disposée au niveau de l'extrémité amont de la rainure 13.

Il convient de noter que cet agencement des parties P1 et P2 n'est aucunement limitatif. Ainsi, la surface interne 13i peut ne pas comporter d'imperfection, en comporter sur une partie, sur plusieurs parties espacées les unes des autres ou encore sur toute sa surface. De même, la surface interne 13i peut ne pas être lisse, être lisse sur une partie, être lisse sur plusieurs parties espacées les unes des autres, ou encore être lisse sur toute sa surface.

Dans une autre réalisation non limitative non illustrée, la surface interne de la rainure 13 peut par exemple être rugueuse au niveau de son extrémité amont et de son extrémité aval.

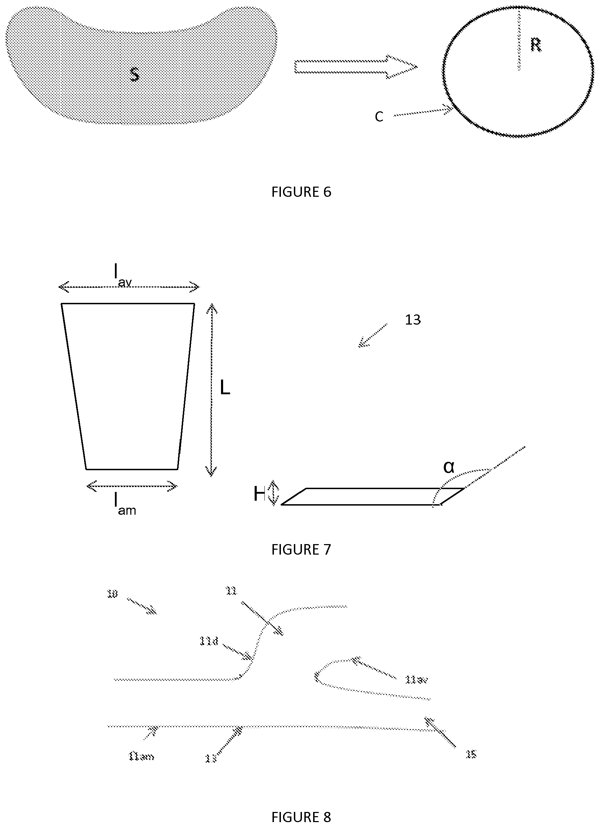

La figure 6 illustre la section d'entrée S de la partie amont 11 am du canal d'alimentation conforme à l'invention. La section d'entée S représentée est positionnée sur un plan perpendiculaire à l'axe longitudinal X de la partie amont 11am du canal d'alimentation 11. Dans cette réalisation non limitative, la section d'entrée S présente la forme d'un lobe.

Les dimensions d'une rainure 13 peuvent par exemple être déterminées selon un cercle C dont la surface de ce cercle C est égale à la surface de la section d'entrée S de la partie amont 11 am du canal d'alimentation 11.

Ainsi, par exemple :
- la largeur amont lam (illustrée sur la figure 7) la de la rainure 13 est comprise entre 0.021 xR et 0.082xR, où R est le rayon du cercle C dont la surface est égale à la surface de la section d'entrée S de la partie amont 11 am du canal d'alimentation 11,
- la largeur aval lav de la rainure 13 est comprise entre 0.021xR et 0.082xR,
- la rainure 13 présente une longueur L comprise entre 0.01xR et 0.21 xR,
- la rainure 13 présente une hauteur H comprise entre 0.001xR et 0.012xR.

Dans cet exemple, l'extrémité aval e13 de la rainure 13 forme avec la surface interne 13i de la rainure un angle α supérieur à 90 degrés. Ainsi le canal d'alimentation 11 ne présente pas de surface d'arrêt du flux d'air qui pourrait créer des turbulences.

La figure 8 représente, de manière schématique, un deuxième exemple non limitatif d'un dispositif de guidage d'air conforme à l'invention. Dans cette réalisation, le dispositif de guidage d'air 10 comporte en outre un canal d'évacuation 15 des objets indésirables. Le canal d'évacuation 15 des objets indésirables est raccordé à l'extrémité aval de la partie amont 11 am du canal d'alimentation 11.

Il convient de noter que le dispositif de guidage d'air conforme à l'invention est applicable au turbopropulseur comportant un dispositif de guidage d'air, plusieurs dispositifs de guidage d'air ou à un open rotor.

En d'autres termes, le dispositif de guidage d'air 10 est applicable aux entrées d'air :
- monolobée de turbopropulseur,
- bilobée de turbopropulseur, ou encore
- bilobée d'open rotor.

De manière générale, les dimensions du canal d'alimentation 11 sont dépendantes de la puissance du moteur, ainsi que de leur emplacement. On peut donc faire varier les dimensions du canal d'alimentation 11 selon la puissance du moteur et de l'emplacement dudit canal d'alimentation.

## Revendications

1. Dispositif de guidage d'air (10) pour turbomachine comportant un canal d'alimentation (11) en air d'un moteur de turbomachine, ledit canal d'alimentation (11) présentant une partie amont (11am) et une partie aval (11av) reliée entre elles par une partie de déviation (11d) construite et adaptée pour acheminer un flux d'air reçu selon une première direction (D1) en provenance de ladite partie amont (11am) vers une deuxième direction (D2) au sein de ladite partie aval (11av), ladite partie amont (11am) et ladite partie de déviation (11d) étant connectées entre elles via un coude intérieur (Ci) et un coude extérieur (Ce), au niveau dudit coude intérieur (Ci), la surface interne (10i) du dispositif de guidage d'air (10) présentant une rainure (13) s'étendant longitudinalement dans le sens de la longueur (11L) du canal d'alimentation (11), ledit dispositif de guidage d'air (10) étant **caractérisé en ce que** les bords longitudinaux (13L) de la rainure (13) sont évasés en direction de l'extrémité aval de la partie amont (11 am) du canal d'alimentation (11), la largeur amont (lam) de la rainure (13) étant inférieure à la largeur aval (lav) de la rainure (13).

2. Dispositif de guidage d'air (10) selon la revendication 1, selon laquelle la largeur amont (lam) de la rainure (13) est comprise entre 0.021xR et 0.082xR, où R est le rayon d'un cercle (C) dont la surface est égale à la surface de la section d'entrée (S) de la partie amont (11am) du canal d'alimentation (11).

3. Dispositif de guidage d'air (10) selon l'une quelconque des revendications précédentes, selon laquelle la largeur aval (lav) de la rainure (13) est comprise entre 0.021 xR et 0.082xR, où R est le rayon d'un cercle (C) dont la surface est égale à la surface de la section d'entrée (S) de la partie amont (11am) du canal d'alimentation (11).

4. Dispositif de guidage d'air (10) selon l'une quelconque des revendications précédentes, selon laquelle la rainure (13) présente une longueur (L) comprise entre 0.01xR et 0.21 xR, où R est le rayon d'un cercle (C) dont la surface est égale à la surface de la section d'entrée (S) de la partie amont (11 am) du canal d'alimentation (11).

5. Dispositif de guidage d'air (10) selon l'une quelconque des revendications précédentes, selon laquelle la rainure (13) présente une hauteur (H) comprise entre 0.001xR et 0.012xR, où R est le rayon d'un cercle (C) dont la surface est égale à la surface de la section d'entrée (S) de la partie amont (11am) du canal d'alimentation (11).

6. Dispositif de guidage d'air (10) selon l'une quelconque des revendications précédentes, selon laquelle au moins une partie de la surface interne (13i) de la rainure (13) présente des imperfections.

7. Dispositif de guidage d'air (10) selon l'une quelconque des revendications précédentes, selon laquelle une partie disposée au niveau de l'extrémité amont de la surface interne (13i) de la rainure (13) est lisse.

8. Dispositif de guidage d'air (10) selon l'une quelconque des revendications précédentes, selon laquelle d'extrémité aval de la rainure (13) forme avec la surface interne (13i) de la rainure (13) un angle (α) supérieur à 90 degrés.

9. Dispositif de guidage d'air (10) selon l'une quelconque des revendications précédentes, comportant en outre un canal d'évacuation (15) des objets indésirables, ledit canal d'évacuation (15) des objets indésirables étant raccordé à l'extrémité aval de la partie amont (11am) du canal d'alimentation (11).

## Patentansprüche

1. Luftführungsvorrichtung (10) für Turbomaschine, umfassend einen Versorgungskanal (11) für Luft eines Turbomaschinenmotors, wobei der genannte Versorgungskanal (11) einen vorgeschalteten Teil (11 am) und einen nachgeschalteten Teil (11 av) aufweist, die miteinander durch einen Ableitungsteil (11d) verbunden sind, der konstruiert und geeignet ist, um einen empfangenen Luftstrom gemäß einer ersten Richtung (D1) von dem genannten vorgeschalteten Teil (11 am) in eine zweite Richtung (D2) innerhalb des genannten nachgeschalteten Teils (11 av) zu verbringen, wobei der genannte vorgeschaltete Teil (11am) und der genannte Ableitungsteil (11d) aneinander über ein internes Knie (Ci) und ein externes Knie (Ce) an dem genannten internen Knie (Ci) angeschlossen sind, wobei die interne Fläche (10i) der Luftführungsvorrichtung (10) eine Rille (13) aufweist, die sich in Längsrichtung in der Längsrichtung (11L) des Versorgungskanals (11) erstreckt, wobei die genannte Luftführungsvorrichtung (10) **dadurch gekennzeichnet ist, dass** die Längsränder (13L) der Rille (13) in Richtung des nachgeschalteten Endes des vorgeschalteten Teils (11 am) des Versorgungskanals (11) ausgeweitet sind, wobei die vorgeschaltete Breite (lam) der Rille (13) geringer ist als die nachgeschaltete Breite (lav) der Rille (13).

2. Luftführungsvorrichtung (10) gemäß Anspruch 1, gemäß der die vorgeschaltete Breite (lam) der Rille (13) zwischen 0,021 x R und 0,082 x R inbegriffen ist, wobei R der Radius eines Kreises (C) ist, dessen Fläche gleich der Fläche des Eingangsabschnitts (S) des vorgeschalteten Teils (11 am) des Versorgungskanals (11) ist.

3. Luftführungsvorrichtung (10) gemäß irgendeinem der voranstehenden Ansprüche, gemäß dem die nachgeschaltete Breite (lav) der Rille (13) zwischen 0,021 x R und 0,082 R inbegriffen ist, wobei R der Radius eines Kreises (C) ist, dessen Fläche gleich der Fläche des Eingangsabschnitts (S) des vorgeschalteten Teils (11 am) des Versorgungskanals (11) ist.

4. Luftführungsvorrichtung (10) gemäß irgendeinem der voranstehenden Ansprüche, gemäß der die Rille (13) eine zwischen 0,01 x R und 0,21 x R inbegriffene Länge (L) hat, wobei R der Radius eines Kreises (C) ist, dessen Fläche gleich der Fläche des Eingangsabschnitts (S) des vorgeschalteten Teils (11 am) des Versorgungskanals (11) ist.

5. Luftführungsvorrichtung (10) gemäß irgendeinem der voranstehenden Ansprüche, gemäß der die Rille (13) eine zwischen 0,001 x R und 0,012 x R inbegriffen Höhe (H) aufweist, wobei R der Radius eines Kreises (C) ist; dessen Fläche gleich der Fläche des Eingangsabschnitts (S) des vorgeschalteten Teils (11 am) des Versorgungskanals (11) ist.

6. Luftführungsvorrichtung (10) gemäß irgendeinem der voranstehenden Ansprüche, gemäß dem wenigstens ein Teil der internen Fläche (13i) der Rille (13) Mängel aufweist.

7. Luftführungsvorrichtung (10) gemäß irgendeinem der voranstehenden Ansprüche, gemäß der ein Teil, der an dem vorgeschalteten Ende der internen Fläche (13i) Rille (13) angeordnet ist, glatt ist.

8. Luftführungsvorrichtung (10) gemäß irgendeinem der voranstehenden Ansprüche, gemäß der das nachgeschaltete Ende der Rille (13) mit der internen Fläche (13i) der Rille (13) einen Winkel (α) von mehr als 90 Grad bildet.

9. Luftführungsvorrichtung (10) gemäß irgendeinem der voranstehenden Ansprüche, umfassend darüber hinaus einen Austragskanal (15) von unerwünschten Gegenständen, wobei der genannte Austragskanal (15) der unerwünschten Gegenstände am nachgeschalteten Ende des vorgeschalteten Teils (11 am) des Versorgungskanals (11) angeschlossen ist.

## Claims

1. An air guide device (10) for a turbomachine including an air supply channel (11) of a turbomachine engine, said supply channel (11) having an upstream part (11 am) and a downstream part (11av) connected to each other through a deflecting part (11d) built and adapted to convey an air flow received along a first direction (D1) from said upstream part (11 am) to a second direction (D2) within said downstream part (11av), said upstream part (11am) and said deflecting part (11d) being connected to each other via an inside bend (Ci) and an outside bend (Ce), at said inside bend (Ci), the inner surface (10i) of the air guide device (10) having a groove (13) extending longitudinally in the length direction (11L) of the supply channel (11), said air guide device (10) being **characterized in that** the longitudinal edges (13L) of the groove (13) are flared towards the downstream end of the upstream part (11 am) of the supply channel (11), the upstream width (lam) of the groove (13) being lower than the downstream width (lav) of the groove (13).

2. The air guide device (10) according to claim 1, wherein the upstream width (lam) of the groove (13) is comprised between 0.021 x R and 0.082 x R, where R is the radius of a circle (C) the area of which is equal to the area of the inlet section (S) of the upstream part (11 am) of the supply channel (11).

3. The air guide device (10) according to any of the preceding claims, wherein the downstream width (lav) of the groove (13) is comprised between 0.021 x R and 0.082 x R, where R is the radius of a circle (C) the area of which is equal to the area of the inlet section (S) of the upstream part (11 am) of the supply channel (11).

4. The air guide device (10) according to any of the preceding claims, wherein the groove (13) has a length (L) comprised between 0.01 x R and 0.21 x R, where R is the radius of a circle (C) the area of which is equal to the area of the inlet section (S) of the upstream part (11 am) of the supply channel (11).

5. The air guide device (10) according to any of the preceding claims, wherein the groove (13) has a height (H) comprised between 0.001 x R and 0.012 x R, where R is the radius of a circle (C) the area of which is equal to the area of the inlet section (S) of the upstream part (11 am) of the supply channel (11).

6. The air guide device (10) according to any of the preceding claims, wherein at least one part of the inner surface (13i) of the groove (13) has defects.

7. The air guide device (10) according to any of the preceding claims, wherein a part disposed at the upstream end of the inner surface (13i) of the groove (13) is smooth.

8. The air guide device (10) according to any of the preceding claims, wherein the downstream end of the groove (13) is at an angle (α) higher than 90 degrees with the inner surface (13i) of the groove (13).

9. The air guide device (10) according to any of the preceding claims, further including an undesirable object-discharging channel (15), said undesirable object-discharging channel (15) being connected to the downstream end of the upstream part (11 am) of the supply channel (11).
